# EUROPÄISCHE PATENTANMELDUNG

(11) **EP 1 284 395 A2**
(43) Veröffentlichungstag der Anmeldung: **19.02.2003**
(21) Anmeldenummer: 02018114.5
(22) Anmeldetag: 13.08.2002
(51) Int. Cl.: F24J 2/10

(54) **Röhrenkollektor mit einem Reflektor sowie Verfahren zu dessen Herstellung**

(30) Priorität: 14.08.2001 DE 10139776
(71) Anmelder: GeySol AG, 56424 Moschheim (DE)
(72) Erfinder: Gey, Christof, 20253 Hamburg (DE)
(74) Vertreter: Grünecker, Kinkeldey, Stockmair & Schwanhäusser Anwaltssozietät

(57) **Zusammenfassung**

Die vorliegende Erfindung betrifft einen Röhrenkollektor mit einem Reflektor sowie ein Verfahren zu dessen Herstellung. Zur Vereinfachung des Herstellungsverfahrens wird mit der vorliegenden Erfindung vorgeschlagen, dass die Reflektoroberfläche des Reflektors durch eine Folie (6) gebildet ist, die von einem formstabilen Unterbau, der eine Reflektorprofilierung aufweist, gehalten ist. Bei dem erfindungsgemäßen Verfahren zur Herstellung eines Reflektors des Röhrenkollektors wird eine die Reflektionsfläche bildende Folie (6) auf eine wellenförmig konturierte Form aufgelegt. Danach wird eine aushärtende Masse auf die der Reflektionsfläche abgewandte Rückseite der Folie aufgebracht. Diese Masse härtet aus und bildet auf diese Weise den formstabilen Unterbau des Reflektors aus.

## Beschreibung

Die vorliegende Erfindung betrifft einen Röhrenkollektor mit ein Wärmeübertragungsfluid enthaltenden Kollektorröhren, die in einem Sammelkasten angeschlossen sind, und einem den Kollektorröhren zugeordneten Reflektor, dessen Reflektoroberfläche einfallende Sonnenstrahlung auf die Kollektorröhren reflektiert.

Bei Röhrenkollektoren der eingangs genannten Art ist der Reflektor üblicher Weise aus einem profilierten, formstabilen Blech gebildet. Die Profilierung dient der Fokussierung der einfallenden Strahlung auf die Kollektorröhren. Die Oberfläche des Reflektors muss den optischen Anforderungen genügen. Dies bedeutet, dass einfallende Sonnenstrahlung möglichst vollständig reflektiert wird. Für eine derartige Reflektion ist eine entsprechend sorgfältig vorbereitete Oberfläche des Reflektors erforderlich. Üblicher Weise werden Reflektoren eines Röhrenkollektors aus einer Vielzahl von Blechen gebildet. Jedes einzelne Blech bildet den Reflektor zu einer einzigen Kollektorröhre. An ihren Stoßstellen überlappen sich die Bleche zur Ausbildung einer einheitlichen Reflektoroberfläche des Röhrenkollektors. Durch einen modularen Aufbau lässt sich zwar der Aufwand zur Herstellung der Reflektoroberfläche, insbesondere bei einer variablen Anzahl von Kollektorröhren, d.h. einer variablen Breite des Röhrenkollektors verringern. Gleichwohl muss die Krümmung der Reflektoroberfläche genau eingestellt werden, um die gewünschte Fokussierung auf die Kollektorröhre zu erzielen. In gleicher Weise mit Aufwand verbunden ist es, die guten optischen Eigenschaften auf der Oberfläche des Reflektors bereitzustellen.

Der vorliegenden Erfindung liegt das technische Problem zugrunde, einen Röhrenkollektor anzugeben, der sich einfach herstellen lässt. Ferner soll ein Verfahren zur Herstellung eines Reflektors eines Röhrenkollektors angegeben werden, welches sich leichter und kostengünstiger durchführen lässt, als das aus dem Stand der Technik bekannte Verfahren.

Zur Lösung des obigen Problem wird mit der vorliegenden Erfindung der eingangs genannte Röhrenkollektor dadurch weitergebildet, dass die Reflektoroberfläche durch eine Folie gebildet ist, die von einem mit Reflektorprofilierung versehenen Unterbau formstabil gehalten ist.

Bei dem erfindungsgemäßen Röhrenkollektor muss der Unterbau lediglich den Formerfordernissen genügen, d.h. derart ausgebildet sein, dass eine Fokussierung auf die Kollektorröhren erfolgt. Bei der Herstellung des Unterbaus muss nicht auf die optischen Qualitäten der Oberfläche geachtet werden. Vielmehr wird die Reflektoroberfläche, d.h. diejenige Oberfläche, auf die die Sonnenstrahlung auftrifft und von dieser auf die Kollektorröhren zurückgeworfen wird, durch eine Folie gebildet. Die Anforderungen hinsichtlich Form- und Oberflächeneigenschaften werden daher bei dem erfindungsgemäßen Röhrenkollektor durch unterschiedliche Bauteile erfüllt. Hierdurch wird die Herstellung des Röhrenkollektors vereinfacht.

Die Folie des erfindungsgemäßen Röhrenkollektors wird vorzugsweise durch ein Foliensandwich gebildet. Dieses Foliensandwich weist auf der die Oberfläche des Reflektors bildenden Oberseite zunächst ein lichtdurchlässiges und wetterbeständiges Folienmaterial auf, wie beispielsweise Polyethylenterephthalat, Polycarbonat, Polyäthylen oder Polymethylmethacrylate. Auf diese lichtdurchlässige und wetterbeständige Folienschicht ist auf der der sonnenbeschienenen Seite abgewandten Rückseite eine reflektierende Schicht aufgebracht, vorzugsweise mittels Sputtern oder Aufdampfen. Die reflektierende Schicht kann beispielsweise aus Aluminium oder Silber gebildet sein. Die reflektierende Schicht kann alternativ mit dem sogenannten Corona-Verfahren aufgebracht sein, bei dem eine Oberflächenbeschichtung unter Atmosphärendruck auf die lichtdurchlässige und wetterbestätige Folie aufgebracht wird.

Im Hinblick auf eine einfache Herstellung eines formstabilen Unterbaus ist es zu bevorzugen, diesen aus einem aushärtenden Kunststoffschaum auszubilden. Der Kunststoffschaum kann auf eine die Reflektorprofilierung vorgebende Formoberfläche aufgebracht werden. Nach dem Entformen des Kunststoffschaums ist die mitunter komplexe Reflektorprofilierung abgeformt worden. Dieses Abformen der Reflektorprofilierung erfolgt vorzugsweise nachdem die reflektierende Folie auf die Form aufgebracht worden ist. Bei dieser Verfahrensführung kann auf ein Trennmittel zu dem Formwerkzeug verzichtet werden. Die Trennfunktion wird durch die eingelegte Folie erreicht. Darüber hinaus wird die reflektierende Oberfläche, d.h. die Folie beim Ausformen des formstabilen Unterbaus mit diesem verbunden. Auf einen separaten Schritt, bei dem die Folie auf den Unterbau aufgebracht wird, kann bei dieser bevorzugten Weiterbildung des erfindungsgemäßen Röhrenkollektors verzichtet werden.

Geeignete Schäume sind beispielsweise aus Polyurethan (PU), Polyethylen (PE) oder Polystyrol (PS). Im Hinblick auf eine möglichst gute Umweltverträglichkeit kann alternativ auch ein Schaum aus einer Kautschukbasis verwendet werden, beispielsweise EPDM. Zur Verbesserung der Haftungseigenschaften der Folie kann deren Reflektoroberfläche abgewandte Rückseite in einem Corona-Verfahren behandelt und hierbei insbesondere die Oberflächenrauhigkeit erhöht werden.

Bei einer alternativen bevorzugten Ausgestaltung des erfindungsgemäßen Röhrenkollektors ist der Unterbau aus einer faserverstärkten Kunststoffplatte insbesondere aus Hanffasern gebildet. Diese faserverstärkte Kunststoffplatte wird vorzugsweise vor der Formgebung derselben zu einem profilierten Formkörper mit der reflektierenden Folie belegt. Die Faserverbundplatte kann aus einem Prepreg gebildet sein, welcher beispielsweise in einer geschlossenen Form zwischen Patrize und Matrize zu einem profilierten Bauteil mit reflektierender Oberfläche umgeformt wird. Alternativ kann die Faserverbundplatte auch durch Aufspritzen von Fasern auf die der Reflektionsfläche der Folie abgewandte Rückseite derselben gebildet sein. Diese Fasern können in durchtränktem Zustand auf die Folie aufgespritzt werden. Alternativ kann die Kunststoffmasse oder eine der aushärtenden Kunststoffkomponenten auch beim Aufspritzen der Fasern separat bzw. nach dem Aufspritzen der Fasern auf die Rückseite der Folie aufgetragen werden. Die Fasern können nach dem Konturieren der die Reflektionsfläche bildenden Folie auf die Rückseite derselben aufgespritzt werden. Hierbei wird die Folie vorzugsweise mit Unterdruck an eine konturierte Formoberfläche gedrückt.

Bei einer weiteren alternativen Ausgestaltung ist der formstabile Unterbau durch ein tiefgezogenes Kunststoffteil gebildet. Auch bei dieser Ausgestaltung wird das Kunststoffteil vorzugsweise vor dem Umformen zunächst mit der reflektierenden Folie belegt. Geeignete Materialien für die Ausbildung des Unterbaus aus einem tiefgezogenen Kunststoffteil sind beispielsweise Polystyrol oder ABS-Polymerisate.

Im Hinblick auf die Standzeit des Röhrenkollektors ist es weiter zu bevorzugen, eine UVstabilisierte Folie zu verwenden, wobei es sich im Hinblick auf die optischen Eigenschaften als vorteilhaft herausgestellt hat, die reflektierende Oberfläche durch Bedampfen oder Besputtern der Folie zu erzeugen. Im Hinblick auf eine möglichst gute Haltbarkeit des Röhrenkollektors hat es sich als vorteilhaft herausgestellt, die Folie aus einem teilkristallinen Kunststoff, insbesondere Polyethylen (PE) auszuformen. Alternativ kann die Folie auch vorzugsweise aus Polyethylenterephthalat (PET) ausgebildet sein.

Der Reflektor sowie der formstabile Unterbau sind vorzugsweise von einem Rahmen umgeben. Insbesondere im Falle eines geschäumten Kunststoffes zur Ausbildung des Unterbaus wird durch diesen Rahmen eine hinreichende Steifigkeit geschaffen. Ferner können an der Außenseite des Rahmenprofils Schlitze ausgeformt sein, welche Dichtbleche zum Anschluss des Kollektormoduls an eine Dachoberfläche aufnehmen können. Der umgebende Rahmen ist vorzugsweise aus Kunststoff oder Aluminium gebildet und dient der Befestigung wesentlicher Bauteile des Röhrenkollektors. So kann auf einer Seite des Rahmens der Sammelkasten befestigt sein, wohingegen auf einer dieser ersten Seite gegenüberliegenden zweiten Seite Halterungen für die freien Enden der Kollektorröhren vorgesehen sein können. Der Rahmen weist vorzugsweise auf seiner Innenseite eine Ausnehmung beispielsweise zur Aufnahme einer Dichtlippe oder zur Aufnahme des Folienendes auf.

Dieser Rahmen ist vorzugsweise mit dem aus geschäumten, ausgehärteten Kunststoff gebildeten Unterbau beim Aufschäumen desselben verbunden. Ein separater Schritt, bei dem der Unterbau mit dem Rahmen verbunden wird, kann hier entfallen.

Zur Lösung des verfahrensmäßigen Aspekts wird mit der Erfindung ein Verfahren zur Herstellung eines Reflektors eines Röhrenkollektors vorgeschlagen, bei dem zunächst eine eine Reflektionsfläche des Röhrenkollektors bildende Folie auf eine wellenförmig konturierte Formoberfläche aufgebracht wird. Diese Form entspricht in ihrer Profilierung der Oberfläche des Reflektors. Danach wird auf eine der Reflektionsfläche abgewandte Rückseite der Folie eine aushärtende fließfähig Masse aufgebracht. Diese Masse füllt beispielsweise allein aufgrund der Schwerkraft die Wellenformen der konturierten Form aus. Nach dem Aushärten der Masse bildet diese einen formstabilen Unterbau aus, welcher durch Adhäsion mit der Rückseite der Folie verbunden ist. Bei dem erfindungsgemäßen Verfahren wird vorzugsweise ein Formkasten verwendet, welcher die Formoberfläche umfänglich umgibt und in welchen die aushärtende Masse eingegossen wird. Die Höhe des Formkastens richtet sich nach der gewünschten Steifigkeit des formstabilen Unterbaus, d.h. der erforderlichen Füllhöhe der aushärtenden fließfähigen Masse.

Bei einer bevorzugten Weiterbildung des erfindungsgemäßen Verfahrens wird eine expandierende Masse verwendet, welche in eine die Formoberfläche umgebende Form eingefüllt wird. Diese Form wird nach dem Einfüllen der expandierenden Masse verschlossen. Beim Expandieren der Masse füllt diese zunächst die Form aus. Danach erhöht sich der Innendruck. Durch diese Erhöhung des Innendruckes wird die Folie eng an die Kontur der Formoberfläche angedrückt. Es ergibt sich eine genaue Abformung der gewünschten Kontur durch die Folie. An geeigneter Stelle werden an der konturierten Formoberfläche vorzugsweise Entlüftungslöcher angebracht, durch welche verhindert wird, dass Luft zwischen der Formoberfläche und der Folie eingeschlossen wird.

Ebenfalls zur möglichst genauen Abformung der Kontur der Formoberfläche werden gemäß einer bevorzugten Weiterbildung der vorliegenden Erfindung Randbereiche der auf die Formoberfläche aufgebrachten Folie erwärmt und gegen die konturierte Formoberfläche gedrückt. Die Folie wird hierbei auf eine Temperatur erwärmt, bei welcher die Folie plastisch verformt werden kann. Nach dieser plastischen Verformung kühlt die Folie entweder gezwungen oder natürlich ab. Erst dann erfolgt das Einfüllen der Formmasse. Dementsprechend liegt die Folie zumindest in den Randbereichen vor dem Einbringen der Formmasse an der konturierten Formoberfläche flächig an.

Die plastische Verformung der Folie erfolgt vorzugsweise zumindest an den beiden Rändern, die sich im wesentlichen rechtwinklig zu den Kollektorröhren erstrecken. Parallel zu der Längserstreckung der Kollektorröhren und parallel zueinander erstrecken sich auch die Wellen der konturierten Formoberfläche. Wird die Folie an diesen Längsseiten plastisch verformt und gegen die Formoberfläche angelegt, so ergibt sich eine Anlage der Folie an die Formoberfläche in sämtlichen Wellentälern der konturierten Formoberfläche. Hierdurch sind gute Voraussetzungen geschaffen, die Folie nach dem Einfüllen der Formmasse konturgetreu und flächig gegen die Formoberfläche anzulegen. Im Hinblick darauf ist es zu bevorzugen, die Folie zumindest abschnittsweise durch Ansaugen gegen die konturierte Formoberfläche anzulegen.

Es hat sich gezeigt, dass eventuelle Ansauglöcher noch an dem fertigen Produkt zu sehen sind, so dass gemäß einer bevorzugten Weiterbildung der Erfindung vorgeschlagen wird, die Folie an Schnittpunkten von benachbarten, konvex ausgebildeten Wellenprofilen anzusaugen. An diesen Schnittpunkten, die sich als gerade Linien parallel zu den Kollektorröhren an der Reflektoroberfläche zeigen, führt eine Streuung der einfallenden Strahlung zu keinen wesentlichen Einbußen beim Wirkungsgrad des Kollektors.

Die plastisch verformten und gegen die Formoberfläche gedrückten Randbereiche der Folie weisen mitunter Falten auf, so dass es gemäß einer bevorzugten Weiterbildung des erfindungsgemäßen Verfahrens zur Ausbildung einer möglichst fehlerfreien Reflektoroberfläche zu bevorzugen ist, zumindest ein Teilstück der erwärmten Randbereiche nach dem Entformen des Reflektors abzutrennen.

Bei einer schließlich zu bevorzugenden Ausführungsform werden ein oder mehrere Profile, welche einen den Reflektor umgebenden Rahmen bilden, in ein Formwerkzeug eingesetzt. Danach wird die Folie in das Formwerkzeug eingesetzt, und zwar derart, dass der Randbereich der Folie zumindest abschnittsweise in an den Profilen vorgesehene Ausnehmungen eingebracht wird. Danach wird die aushärtende Masse auf die Folie aufgebracht. Diese aushärtende Masse härtet unter Einschluss der Ausnehmungen der Profile aus. Der durch die aushärtende Masse gebildete Unterbau des Reflektors erstreckt sich dementsprechend nach außen bis in die Ausnehmungen der Profile und verbindet zumindest formflüssig, gegebenenfalls kraftschlüssig den Unterbau zusammen mit der reflektierenden Folie mit den Profilen des Rahmens. Dieser Rahmen kann als in sich geschlossener Rahmen in das Formwerkzeug eingesetzt werden. Alternativ können auch lediglich beispielsweise sich gegenüberliegende Rahmenabschnitte in das Formwerkzeug eingesetzt, danach mit der Folie und der aushärtenden Masse und erst danach zur Vervollständigung des Rahmens mit weiteren Rahmenprofilteilen zu einem in sich geschlossenen Rahmen verbunden werden.

Die vorliegende Erfindung wird nachfolgend anhand von zwei Ausführungsbeispielen in Verbindung mit der Zeichnung näher erläutert. In dieser zeigen:
- Figuren 1a bis 1d: ein erstes Ausführungsbeispiel zur Herstellung eines Reflektors eines Röhrenkollektors und
- Figur 2: eine Abwandlung zu dem in den Figuren 1a bis 1d gezeigten Ausführungsbeispiel.

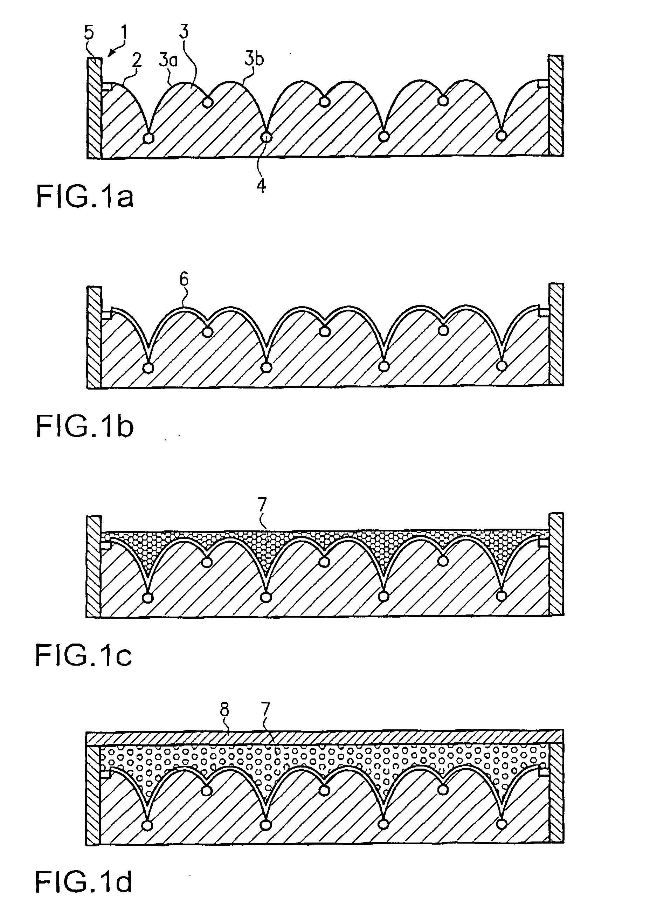

Die Figur 1a zeigt eine Form 1 mit einer konturierten Formoberfläche 2. Die Formoberfläche 2 weist mehrere konvex ausgeformte Wellen 3 auf, wobei identische Wellenhälften 3a, 3b spiegelsymmetrisch zu einer Symmetrieachse A ausgeformt sind. An den Schnittpunkten der Wellenhälften 3a, 3b sowie an den Schnittpunkten der einzelnen Wellen 3 befinden sich Saugkanäle 4, die sich über hier nicht dargestellte Saugöffnungen zu der Formoberfläche 2 hin öffnen. Die Saugkanäle 4 sowie die Wellen 3 erstrecken sich parallel zueinander aus der Zeichenebene heraus. Die Formoberfläche 2 wird umfänglich von einem Rahmen 5 der Form 1 umgeben.

Auf die Formoberfläche 2 wird in dem in Figur 1b gezeigten Schritt eine reflektierende Folie 6 aufgelegt. Die reflektierende Oberfläche der Folie 6 liegt gegen die Formoberfläche 2 an. Durch Zuschalten der Saugkanäle 4 wird die Folie 6 in die jeweiligen Täler zwischen den einzelnen Wellen 3 bzw. den Wellenhälften 3a und 3b eingezogen. Die Folie liegt am Ende dieses Verfahrensschrittes flächenbündig an der gesamten Kontur der Formoberfläche 2 an.

Danach wird in die Form 1 eine aufschäumende Masse 7 aus Polyurethan eingefüllt. Diese füllt die Kontur der Formoberfläche aus (vgl. Figur 1c).

Dann wird ein in Figur 1d gezeigter Deckel 8 auf die Form 1 aufgelegt. Durch diesen Deckel 8 wird der Formraum abgedichtet. Die Polyurethanmasse 7 schäumt auf und füllt zunächst den gesamten Forminnenraum aus. Bei fortschreitendem Aufschäumen der Polyurethanmasse 7 steigt der Druck in dem Forminnenraum. Die Folie 6 wird hierdurch gegen die Formoberfläche 2 gedrückt. Nach dem Aushärten des Polyurethanschaumes wird das Bauteil aus dem Rahmen entnommen, d.h. entformt. Danach werden die seitlichen Randbereiche, die für einen vollständigen, jeweils eine Kollektorröhre umgebenden Reflektor nicht benötigt abgetrennt.

Es ergibt sich ein Reflektor, dessen tragender Unterbau durch die ausgehärtete Polyurethanmasse gebildet wird. Die Reflektionsoberfläche ist durch die Folie 6 gebildet. Zwischen benachbarten Schnittpunkten von Wellen 3 wird jeweils bei der Montage des Röhrenkollektors eine Kollektorröhre angeordnet. Die Kollektorröhre befindet sich in Breitenrichtung exakt über dem Schnittpunkt der Wellenhälften 3a, 3b. Vor der Montage des Kollektors können eventuelle seitliche Ränder des Bauteils, die benachbart zu den Wandungen des Rahmens 5 ausgebildet worden sind, abgeschnitten werden. Derartige Randbereiche leisten entweder aufgrund ihrer geometrischen Ausgestaltung keinen Beitrag zur Reflektion einfallender Sonnenstrahlung auf einzelne Kollektorröhren oder aber weisen aufgrund von Fertigungstoleranzen keine Folie 2 auf (vgl. Figuren 1c, 1d).

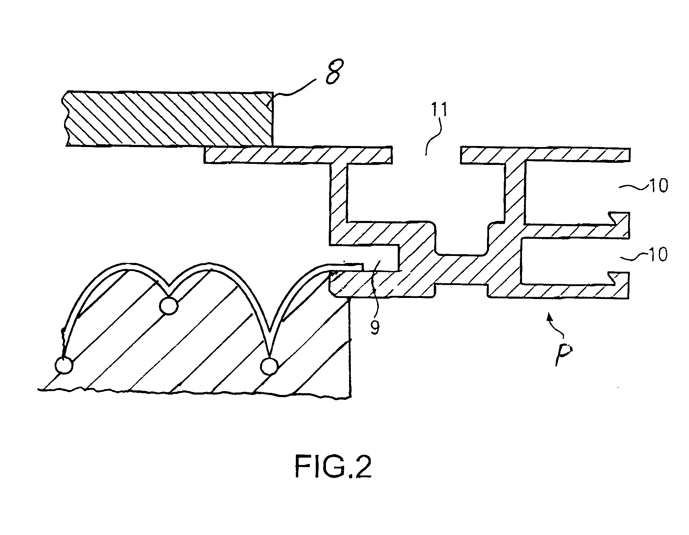

In Figur 2 ist ein alternatives Ausführungsbeispiel gezeigt, bei dem die Formoberfläche 2 benachbart zu dem Rand der Form 1 eine Aufnahme für ein Kollektorrahmenprofil P hat. Dieses Kollektorrahmenprofil P hat an seiner Innenseite eine Ausnehmung 9. Die Kontur der Ausnehmung 9 sowie der Verlauf der Formoberfläche 2 sind derart, dass die Formoberfläche ohne Absatz in die Seitenwandung der Ausnehmung 9 übergeht. Bei der Herstellung eines Reflektors wird die Breite der Folie 6 derart bemessen, dass sie sich in die Ausnehmung 9 erstreckt. Beim späteren Verfüllen des Forminnenraumes mit aufschäumenden Kunststoff füllt der Schaum auch die Ausnehmung 9 aus. Der Reflektor und das Kollektorrahmenprofil P werden auf diese Weise form- und kraftschlüssig miteinander verbunden. Durch den erzeugten Druck beim Aufschäumen der Polyurethanmasse wird die Folie 6 dichtend gegen die innere Fläche bzw. die inneren Flächen der Ausnehmung 9 gelegt. Es wird verhindert, dass aufschäumende Masse direkt mit der Formoberfläche 2 in Berührung kommt. Nach dem Entformen wiederum wird die Ausnehmung 9 durch die Folie 2 abgedichtet, so dass auf der Kollektoroberfläche ablaufendes Regenwasser nicht zwischen das Kollektorrahmenprofil P und den Reflektor gelangen kann.

Bei dem in Figur 2 gezeigten Ausführungsbeispiel weist das Kollektorrahmenprofil P an seiner Außenseite 2 sich nach außen öffnende Befestigungsschlitze 10 auf, in welche Bleche zum seitlichen bzw. unteren Anschluss an Rahmenprofile benachbarter Kollektoren bzw. an eine Dachfläche eingesetzt werden können. Auf der Unterseite des Kollektorrahmenprofils P ist eine Befestigungsnut 11 vorgesehen, über welche der Röhrenkollektor später an einem Dachstuhl oder dergleichen befestigt werden kann.

Der auf diese Weise hergestellte Reflektor wird dann mit den übrigen Teilen eines Röhrenkollektors verbunden. Auf einer Stirnseite wird ein Sammelkasten angeschlossen, in welchen die Kollektorröhren üblicher Weise münden und dort die über Sonneneinstrahlung gewonnene Energie an ein zirkulierendes Medium über Wärmetauscher abführen. An einer diesen Sammelkasten gegenüberliegenden Stirnseite des Reflektors werden üblicher Weise Halterungen vorgesehen, die jeweils eine Kollektorröhre im Bereich ihres freien Endes halten und abstützen. Die Kollektorröhren haben - wie bei Röhrenkollektoren üblich - eine absorbierende Oberfläche und beinhalten Leitungen, die ein Wäremübertragungsfluid führen. Dieses nimmt die Strahlungswärme auf und gibt die Wärme im Bereich des Sammelkastens an das zirkulierende Medium ab.

### Bezugszeichenliste

- 1: Form
- 2: Formoberfläche
- 3: Welle
- 3a, 3b: Wellenhälften
- 4: Saugkanal
- 5: Rahmen
- 6: Folie
- 7: Schaum
- 8: Deckel
- 9: Ausnehmung
- 10: Befestigungsschlitze
- 11: Befestigungsnut

- P: Kollektorrahmenprofil

## Patentansprüche

1. Röhrenkollektor mit ein Wärmeübertragungsfluid enthaltenden Kollektorröhren, die an einen Sammelkasten angeschlossen sind und einem den Kollektorröhren zugeordneten Reflektor, dessen Reflektoroberfläche einfallende Sonnenstrahlung auf die Kollektorröhren reflektiert,
**dadurch gekennzeichnet**
**dass** die Reflektoroberfläche durch eine Folie (6) gebildet ist, die von einem mit Reflektorprofilierung versehenen Unterbau (7) formstabil gehalten ist.

2. Röhrenkollektor nach Anspruch 1, **dadurch gekennzeichnet, dass** der Unterbau aus einem aushärtenden Kunststoff (7) gebildet ist.

3. Röhrenkollektor nach Anspruch 1 oder 2, **dadurch gekennzeichnet, dass** der Unterbau aus einer faserverstärkten Kunststoffplatte gebildet ist.

4. Röhrenkollektor nach Anspruch 3, **dadurch gekennzeichnet, dass** die faserverstärkte Kunststoffplatte durch auf die Folie (6) aufgespritzte, durchtränkte Fasern gebildet ist.

5. Röhrenkollektor nach Anspruch 3 oder 4, **dadurch gekennzeichnet, dass** die Fasern Hanffasern sind.

6. Röhrenkollektor nach Anspruch 1, **dadurch gekennzeichnet, dass** der Unterbau aus einem tiefgezogenen Kunststoffteil gebildet ist.

7. Röhrenkollektor nach einem der vorherigen Ansprüche, **dadurch gekennzeichnet, dass** die Folie (6) aus einem kristallisierbaren Kunststoff, insbesondere Polyethylen (PE), Polycarbonat (PC), Polymethylmethacrylat (PMMA) oder Polyethylenterephthalat (PET) gebildet ist.

8. Röhrenkollektor nach einem der vorherigen Ansprüche, **dadurch gekennzeichnet, dass** die Folie UV-stabilisiert ist.

9. Röhrenkollektor nach einem der vorherigen Ansprüche, **gekennzeichnet durch** einen den Reflektor (6) und den Unterbau (7) umgebenden Rahmen (8).

10. Röhrenkollektor nach einem der vorherigen Ansprüche, **dadurch gekennzeichnet, dass** der Rahmen (8) mit dem Reflektor (6) durch Verschäumen verbunden ist.

11. Verfahren zur Herstellung eines Reflektors eines Röhrenkollektors **gekennzeichnet durch** folgende Verfahrensschritte:
Aufbringen einer eine Reflektionsfläche des Reflektors bildenden Folie (6) auf eine wellenförmig konturierte Formoberfläche (2);
Aufbringen einer aushärtenden fließfähigen Masse auf eine der Reflektionsfläche abgewandte Rückseite der Folie (6) und
Entformen des Bauteils nach dem Aushärten der Masse.

12. Verfahren nach Anspruch 11, **dadurch gekennzeichnet, dass** eine expandierende Masse (7) verwendet wird und dass eine die Formoberfläche (2) umgebende Form nach dem Einfüllen der Masse (7) verschlossen wird.

13. Verfahren nach Anspruch 11 oder 12, **dadurch gekennzeichnet, dass** die Randbereiche der auf die Formoberfläche (2) aufgebrachten Folie (6) zur plastischen Verformung erwärmt und gegen die konturierte Formoberfläche (2) gedrückt werden.

14. Verfahren nach Anspruch 13, **dadurch gekennzeichnet, dass** die Randbereiche beim Andrücken der Folie (6) plastisch verformt werden.

15. Verfahren nach Anspruch 13 oder 14, **dadurch gekennzeichnet, dass** zumindest ein Teilstück der erwärmten Randbereiche nach dem Entformen abgetrennt wird.

16. Verfahren nach einem der Ansprüche 11 bis 15, **dadurch gekennzeichnet, dass** die Folie (6) zumindest abschnittsweise durch Ansaugen gegen die konturierte Formoberfläche (2) angelegt wird.

17. Verfahren nach Anspruch 16, **dadurch gekennzeichnet, dass** die Folie (6) an Schnittpunkten von benachbarten, konvex ausgebildeten Wellenprofilen (3a, 3b) angesogen wird.

18. Verfahren nach einem der vorherigen Ansprüche 11 bis 17, **dadurch gekennzeichnet, dass** ein oder mehrere einen den Reflektor umgebenden Rahmen bildende Profile (P) in ein Formwerkzeug eingesetzt werden,
dass die Folie (6) in das Formwerkzeug eingebracht und mit ihrem Rand zumindest abschnittsweise in eine an dem Profil (P) vorgesehene Ausnehmung eingebracht werden und
dass die aushärtende Masse (7) auf die Folie (6) aufgebracht wird und unter Einschluss der Ausnehmung (9) aushärtet.
